Europäisches Patentamt

European Patent Office

Office européen des brevets

(11) Veröffentlichungsnummer: **0 301 185**

**A1**

(12) ## EUROPÄISCHE PATENTANMELDUNG

(21) Anmeldenummer: **88107728.3**

(22) Anmeldetag: **13.05.88**

(51) Int. Cl.⁴: **B23B 31/04**

(30) Priorität: **30.07.87 DE 3725229**

(43) Veröffentlichungstag der Anmeldung:
**01.02.89 Patentblatt 89/05**

(84) Benannte Vertragsstaaten:
**AT BE CH ES FR GB IT LI NL SE**

(71) Anmelder: **Kempf, Werner S.**
**Leintelstrasse 8**
**D-7313 Reichenbach/Fils(DE)**

(72) Erfinder: **Wagner, Gerhard**
**Zollernstrasse 21**
**D-7066 Hohengehren(DE)**

(74) Vertreter: **Vetter, Hans, Dipl.-Phys. Dr. et al**
**Patentanwalte Dipl.-Ing. Rudolf Magenbauer**
**Dipl.-Phys. Dr. Otto Reimold Dipl.-Phys. Dr.**
**Hans Vetter Hölderlinweg 58**
**D-7300 Esslingen(DE)**

(54) **Spannvorrichtung für spanende Werkzeuge wie Gewindebohrer, Fräser od.dgl., insbesondere Vollhartmetall-Werkzeuge.**

(57) Es wird eine Spannvorrichtung für spanende Werkzeuge wie Gewindebohrer, Fräser od. dgl., insbesondere Vollhartmetall-Werkzeuge vorgeschlagen, die einen den Haltebereich (15) des Werkzeuges (16) aufnehmenden, mit einem Schaft (10) versehenen Haltekörper (13) aufweist. Dieser Haltekörper (13) ist mit einer bis zu einer Schrägfläche (11) reichenden, den entsprechend geformten Haltebereich (15) des Werkzeuges (16) aufnehmenden Bohrung (12) versehen, wobei ein auf das Werkzeug einwirkendes und dieses gegen die Schrägfläche (11) pressendes Klemmteil (19) vorgesehen ist. Durch diese Spannvorrichtung können Werkzeuge mit sehr kurzem und sehr einfach geformtem Haltebereich gehalten werden, wobei dennoch eine sehr gute Drehmomentübertragung gewährleistet ist. Dadurch eignet sich diese Spannvorrichtung insbesondere für ensprechend ausgebildete Werkzeuge aus Vollhartmetall, deren Herstellung dadurch in Folge der einfachen und materialschonenden Arbeitsvorgänge kostengünstig möglich ist.

FIG. 1

## Spannvorrichtung für spanende Werkzeuge wie Gewindebohrer, Fräser od. dgl., insbesondere Vollhartmetall-Werkzeuge

Die Erfindung betrifft eine Spannvorrichtung für spanende Werkzeuge wie Gewindebohrer, Fräser od. dg., insbesondere Vollhartmetall-Werkzeuge, mit einem den Haltebereich des Werkzeuges aufnehmenden, mit einem Schaft versehenen Haltekörper.

Derartige Spannvorrichtungen, oft auch als Schnellspannvorrichtungen bezeichnet, sind zum schnellen Werkzeugwechsel in vielfachen Ausführungen bekannt. Sie weisen entweder eine aufwendige Mechanik auf oder machen speziell geformte Werkzeugschäfte erforderlich.

In jüngster Zeit breitet sich der Einsatz von Vollhartmetall-Werkzeugen aus, um zum einen härtere Materialien bohren zu können und/oder zum anderen eine längere Standzeit zu erreichen. Derartige Vollhartmetall-Werkzeuge sind beispielsweise Gewindebohrer, Spiralbohrer, Fräser, Einstechgeräte, Reibwerkzeuge, Senkwerkzeuge, Drehwerkzeuge od. dgl.. Unter Hart metallen versteht man sehr harte Legierungen oder Sinterungen aus Metallkarbiden, wobei vor allem WC Verwendung findet. Ein bekanntes, für Präzisionswerkzeuge geeignetes Hartmetall ist beispielsweise unter den Bezeichnungen K10 bzw. K20 im Handel erhältlich und besteht aus 6% Co, 90% WC und 4% TiC bzw. TaC bzw. NbC. Solche Hartmetalle sind zum einen teuer und zum anderen relativ schwer zu bearbeiten. Wird im einfachsten Fall das gesamte Werkzeug aus Hartmetall hergestellt, so führt dies zu hohen Werkstoffkosten, wobei der erforderliche lange Schaft zum Halten des Werkzeuges unnötigerweise aus Hartmetall besteht. Zum anderen kann daher auch ein kurzer Vollhartmetall-Werkzeugkörper mit einem Schaft aus Nichthartmetall durch Löten, Schweißen od. dgl. verbunden werden. Wegen der erforderlichen Präzision ist dieses Verfahren jedoch sehr kompliziert und daher ebenfalls teuer. Bei einem Bruch der Verbindungsstelle ist das gesamte Werkzeug wertlos.

Eine Aufgabe der Erfindung besteht daher darin, eine Spannvorrichtung der eingangs genannten Gattung zu schaffen, mit Hilfe derer auch sehr kurze, einfach geformte und herzustellende Werkzeugschäfte sicher gehalten werden können, wobei auch große Drehmomente übertragbar sein sollen.

Diese Aufgabe wird erfindungsgemäß dadurch gelöst, daß der Haltekörper mit einer bis zu einer Schrägfläche reichenden, den ensprechend geformten Haltebereich des Werkzeuges aufnehmenden Bohrung versehen ist und daß ein auf das Werkzeug einwirkendes und dieses gegen die Schrägfläche pressendes Klemmteil vorgesehen ist. Durch die Anpressung an die Schrägfläche nimmt das Werkzeug eine sehr exakte Position ein, wobei große Drehmomente übertragen werden können. Da diese Übertragung vor allem durch die Schrägfläche bestimmt ist, kann das Schaftteil am Werkzeug sehr kurz gehalten werden, so daß insbesondere bei Vollhartmetall-Werkzeugen eine wesentliche Werkstoff- und damit Kosteneinsparung erreicht werden kann. Die erforderliche Schrägfläche kann auch bei Vollhartmetall-Werkzeugen auf einfache Weise hergestellt werden, beispielsweise indem ein entsprechender Rohling auf den gewünschten Durchmesser gebracht wird, dann die beiden Enden unter Bildung je eines gewünschten Werkzeuges bearbeitet werden und schließlich die beiden Werkzeuge durch einen Schrägschnitt unter Bildung der Schrägflächen voneinander getrennt werden. Diese Vorgänge lassen sich auf einfache Weise auch bei Vollhartmetall-Werkzeugen durchführen.

Ein weiterer Vorteil besteht darin, daß die Spannvorrichtung selbst ebenfalls einen sehr einfachen und kostengünstigen Aufbau bei relativ geringer Größe aufweist, so daß die Anschaffung mehrerer Spannvorrichtungen für verschiedene Größen und Werkzeuge kein zu großer finanzieller Aufwand bedeutet.

Durch die in den Unteransprüchen aufgeführten Maßnahmen sind vorteilhafte Weiterbildungen und Verbesserungen der im Anspruch 1 angegebenen Spannvorrichtung möglich.

Eine besonders einfache Herstellung wird dadurch erreicht, daß die Schrägfläche am in den Haltekörper eintauchenden und mit diesem fest verbundenen Schaft angeordnet ist. Hierzu ist die Bohrung im Haltekörper zweckmäßigerweise durchgehend, so daß sie neben dem Werkzeug auch den mit der Schrägfläche versehenen Endbereich des Schaftes aufnehmen kann, der hierzu beispielsweise eingepresst oder lasergeschweißt wird.

Eine besonders einfache Ausgestaltung, die sich insbesondere für langsam laufende Werkzeuge wie Gewindebohrer eignet, wird dadurch erreicht, daß das Klemmteil als Spannschraube in einer Gewindebohrung ausgebildet ist, die gegen die Schrägfläche gerichtet durch den Haltekörper bis zur Bohrung verläuft. Die Anpresswirkung der Klemmschraube kann noch dadurch verbessert werden, daß ihr Ende an einer entsprechend ausgestalteten Einformung am Haltekörper des eingespannten Werkzeuges anliegt. Durch diese einfache Ausgestaltung kann bei geringen Herstellungskosten auch ein schneller und einfacher Werkzeugwechsel erreicht werden.

Für schneller laufende Werkzeuge, wie Bohrer, Reib- und Senk werkzeuge od. dgl., die eine exaktere Zentrierung erfordern, wird das Klemmteil vorteilhafterweise als mit zwei gegensinnig zueinander geneigten konusförmigen Außenflächen versehene, den Haltebereich des Werkzeuges einspannende Spannzange ausgebildet, wobei die erste Außenfläche an einer entsprechend geformten Innenfläche des Haltekörpers anlegbar ist und sich die andere Außenfläche an einer entsprechenden Konusfläche eines die Spannzange in das Innere des Haltekörpers schiebenden Spannteiles abstützt. Während die Übertragung des Drehmomentes in entsprechender Weise über die Schrägfläche erfolgt, die einen kurzen Haltebereich des Werkzeuges gestattet, kann durch die Spannzange eine exaktere Zentrierung des Werkzeuges beim Spannen erfolgen bzw. beibehalten werden. Die Spannzangen können mit verschiedenen Innendurchmessern ausgestattet werden, so daß für den Einsatz verschiedener Werkzeuge jeweils lediglich verschiedene Spannzangen benötigt werden, während die übrige Spannvorrichtung unverändert bleibt. Dies führt ebenfalls zu einer Verringerung der Investitionskosten, insbesondere dann, wenn eine große Vielzahl verschiedener Werkzeuge eingesetzt werden sollen.

Das Spannteil umgreift den Haltekörper wenigstens teilweise und ist über ein Gewinde daran verschiebbar. Auf diese Weise kann der Spannvorgang sogar mit der Hand durchgeführt werden, wenn das den Haltekörper umgreifende Spannteil ent sprechend großflächig ausgebildet ist und eine griffige Oberfläche aufweist.

Um den Einfluß der Reibung beim Spannen zu verringern besteht das Spannteil aus einem Gewindeteil und einem die Konusfläche aufweisenden Teil, wobei diese Teile über Wälzglieder gegeneinander verdrehbar ausgebildet sind. Hierzu kann zweckmäßigerweise ein Kugelring zwischen einander umgreifenden Spannflächen der beiden Teile vorgesehen sein. Auf diese Weise braucht sich das die Konusfläche aufweisende Teil an der Spannzange bei der schraubenden Spannbewegung nicht zu drehen, wobei die Wälzglieder bzw. der Kugelring in reibungsarmer Weise die Schraubbewegung in eine Axialbewegung übertragen.

Die Spannvorrichtung eignet sich auch zu direkten Zuführung von Kühlmittel zum Werkzeug, indem ein von der Schrägfläche im Haltekörper ausgehender, axial durch den Schaft verlaufender Kühlmittelkanal vorgesehen ist. Dieser mündet am Schaftende und/oder seitlich an der Schaftumfangsfläche nahe des Haltekörpers. Der Kühlmittelzufluß kann daher wahlweise von der Stirnfläche des Schaftes aus oder seitlich erfolgen. Zur seitlichen Zuführung umgreift zweckmäßigerweise ein auf den Schaft aufschiebbares und dort drehbar gehaltenes Kühlmittelanschlußglied die seitliche Mündung mittels einer Innenringnut, die über einen Verbindungskanal mit einer vorzugsweise als Schnellwechselanschluß ausgebildeten Anschlußstelle für eine Kühlmittelleitung verbunden ist. Dieses Kühlmittelanschlußglied kann an einer Kühlmittelleitung ortsfest fixiert werden, während sich der Schaft darinnen dreht. Zur Abdichtung sind dazu auf beiden Seiten der Innenringnut Ringdichtungen vorgesehen.

Zum Bearbeiten oder Herstellen von Sacklöchern sind die verwendeten Werkzeuge üblicherweise mit einem zentralen Kühlmittelkanal versehen. Beim Einsetzen eines derartigen Werkzeuges in die Spannvorrichtung ist automatisch auch der Kühlmittelzufluß über die Schrägfläche hergestellt, wobei zur Abdichtung zweckmäßigerweise die das Werkzeug aufnehmende Bohrung mit einer Ringdichtung versehen ist.

Soll dagegen eine Durchgangsöffnung bearbeitet werden, so werden üblicherweise Werkzeuge mit wenigstens einem außenseitigen, nutartigen Kühlmittelkanal verwendet. Hierfür weist die Schrägfläche im Haltekörper eine Ringnut auf, die über wenigstens eine Verbindungsnut mit dem Kühlmittelkanal verbunden ist. Auf diese Weise kann Kühlmittel vom zentralen Kühlmittelkanal aus über die Schrägfläche in die außenseitigen Kühlmittelkanäle gelangen und am Werkzeug entlang fließen. Zur direkten Zuführung dieses Kühlmittels zur gewünschten Stelle des Werkzeuges, wo die Bearbeitung stattfindet, ist ein umfangsseitig am Haltekörper befestigbarer Balgkörper vorge sehen, der sich bis zur Umfangsfläche des aus dem Haltekörper ragenden Werkzeuges erstreckt. Das durch die außenseitigen Kühlmittelkanäle aus der Spannvorrichtung austretende Kühlmittel wird in diesem Balgkörper gesammelt und an der gewünschten Stelle über diese außenseitigen Kühlmittelkanäle dem Bearbeitungsort zugeführt.

Ausführungsbeispiele der Erfindung sind in der Zeichnung dargestellt und in der nachfolgenden Beschreibung näher erläutert. Es zeigen:

Fig. 1 ein erstes Ausführungsbeispiel einer Spannvorrichtung mit einem als Spannschraube ausgebildeten Klemmteil in einer Schnittdarstellung,

Fig. 2 einen Querschnitt durch den beispielhaft in Fig. 1 als Werkzeug dargestellten Gewindebohrer,

Fig. 3 eine Dichtungsschraube zum Verschließen der Mündungen des Kühlmittelkanals im Schaft,

Fig. 4 eine Abwandlung des in Fig. 1 dargestellten Ausführungsbeispiels zur Bearbeitung von Durchgangsbohrungen in einer Teildarstellung,

Fig. 5 ein weiteres Ausführungsbeispiel einer Spannvorrichtung für höhere Drehgeschwindigkeiten mit einem als Spannzange ausgebildeten Klemmteil und

Fig. 6 eine Vorderansicht der Spannzange.

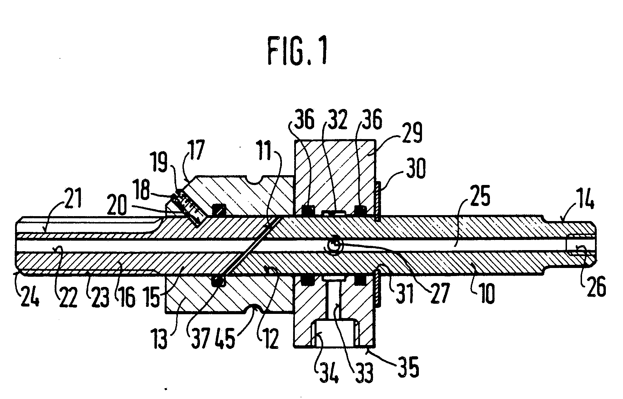

Bei dem in Fig. 1 dargestellten Ausführungsbeispiel ist eine Stirnseite eines langgestreckten Schaftes 10 mit rundem Querschnitt als Schrägfläche 11 ausgebildet, die gegenüber der Axialrichtung des Schaftes 10 um 45° geneigt ist. Dieses Schaftende ist in eine durchgehende Bohrung 12 eines zylindrischen Haltekörpers 13 eingesetzt und erstreckt sich etwa bis zur Mitte dieser Bohrung 12. Zur Befestigung des Schaftes 10 im Haltekörper 13 sind diese Teile entweder miteinander verpresst, lasergeschweißt, elektronenstrahlgeschweißt od. dgl.. Das andere, freie Ende des Schaftes 10 ist als Haltevierkant 14 ausgebildet.

In die Bohrung 12 ist ein Haltebereich 15 eines Gewindebohrers 16 eingesetzt, dessen Stirnseite entsprechend der Schrägfläche 11 abgeschrägt ist und an dieser ganzflächig anliegt. Die dem Gewindebohrer 16 zugewandte Außenkante des Haltekörpers 13 weist an einer Stelle eine Abflachung 17 auf, von wo aus eine Gewindebohrung 18 gegen die Schrägfläche 11 gerichtet bis zur Bohrung 12 verläuft. Die Axialrichtung der Gewindebohrung 18 verläuft dabei im wesentlichen senkrecht zur Schrägfläche 11. In diese Gewindebohrung 18 ist eine Spannschraube 19 eingeschraubt, die an einer entsprechend ausgebildeten Einformung 20 im Haltebereich 15 des Gewindebohrers 16 anliegt und den Gewindebohrer 16 dadurch gegen die Schrägfläche 11 presst. Die Einformung 20 weist dabei eine ebene Anpressfläche für die Spannschraube 19 auf, die im wesentlichen senkrecht zur Axialrichtung dieser Spannschraube 19 verläuft.

Anstelle eines Gewindebohrers 16 kann selbstverständlich auch ein anderes Werkzeug, wie beispielsweise ein Spiralbohrer, ein Fräser, ein Einstechgerät, ein Reibwerkzeug, ein Senkwerkzeug, ein Drehwerkzeug od. dgl. eingesetzt werden, sofern der Haltebereich 15 entsprechend ausgebildet ist. Ein Werkzeug mit einem derartigen Haltebereich läßt sich sehr einfach auch aus Vollhartmetall herstellen, indem zunächst ein Rohling spitzenlos auf den erforderlichen Durchmesser rundgeschliffen wird. Danach werden - im Falle eines Gewindebohrers - drei um jeweils 120° versetzte Nuten 21 eingeschliffen. Ein zentraler Kühlmittelkanal 22 kann im Rohling aus Vollhartmetall beispielsweise bereits eingesintert sein, sofern eine solcher beispielsweise zum Einbringen von Kühlmittelflüssigkeit in Sacklöchern erforderlich und erwünscht ist. Danach werden im Bereich der beiden Enden Gewinde 23 und Anschnitte 24 geschliffen. Nun werden die Einformungen 20 eingeschliffen, und schließlich wird eine Trennung in der Mitte des so bearbeiteten Teils durch einen 45° - Schrägschnitt durchgeführt. Mit diesen einfach durchzuführenden Arbeitsgängen können jeweils zwei Gewindebohrer bzw. Werkzeuge gleichzeitig hergestellt werden, wobei der Materialverlust sehr gering ist.

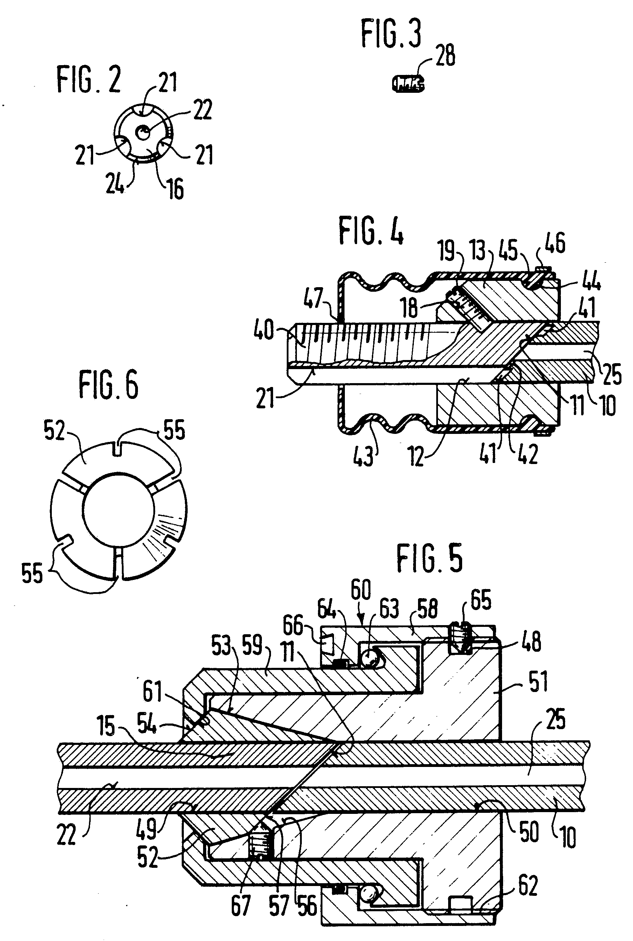

Zur Zuführung von flüssigem Kühlmittel oder Schmiermittel weist der Schaft 10 einen durchgehenden, axial verlaufenden, zentralen Kühlmittelkanal 25 auf. Neben einer Mündung 26 am freien Ende des Schaftes 10 besitzt dieser Kühlmittelkanal 25 eine seitliche Mündung 27 in der Nähe des Haltekörpers 13 außerhalb desselben. Die beiden Mündungen 26, 27 sind jeweils mit einem Innengewinde versehen, so daß sie mittels einer in Fig. 3 dargestellten Dichtungsschraube 28, die beispielsweise aus Nylon bestehen kann, einzeln oder zusammen verschließbar sind. Selbstverständlich kann in einer einfacheren Ausführungsform auch eine der beiden Mündungen entfallen, sofern der Kühlmittelzufluß immer von derselben Stelle ausgehen soll.

Im Falle eines seitlichen Kühlmittelzuflußes wird ein vorzugsweise aus Kunststoff hergestelltes, zylindrisches Kühlmittelanschlußglied 29 auf den Schaft 10 aufgeschoben und in Anlage mit dem Haltekörper 13 gebracht. Zur Sicherung dieser axialen Lage dient ein Seegerring 30, der in eine entsprechende Ringnut 31 im Schaft 10 eingesetzt wird. Im Bereich der seit lichen Mündung 27 besitzt dieses Kühlmittelanschlußglied 29 eine Innenringnut 32, die über einen Verbindungskanal 33 mit einem Schnellwechselanschluß 34 zum Anschließen einer nicht dargestellten Kühlmittelleitung verbunden ist. Dieser Schnellwechselanschluß 34 ist als Gewindeanschluß dargestellt, jedoch sind selbstverständlich auch andere Anschlußarten, wie beispielsweise ein Bajonettverschluß, ein Steckverschluß od. dgl. möglich. Der Schnellwechselanschluß 34 ist an einer Abflachung 35 der ansonsten zylindrischen Außenfläche des Kühlmittelanschlußgliedes 29 angeordnet. Zu beiden Seiten der Innenringnut 32 sind in Nuten gehaltene Runddichtungen 36 an der Innenfläche des Kühlmittelanschlußgliedes 29 angeordnet, um die Innenringnut 32 abzudichten.

Das Kühlmittelanschlußglied 29 ist drehbar auf dem Schaft 10 angeordnet und bei angeschlossener Kühlmittelleitung ortsfest gehalten. Das Kühlmittel dringt über die Ringnut 32 in die seitliche Mündung 27 der sich drehenden Spannvorrichtung ein und gelangt über die Kühlmittelkanäle 25, 22 zur Spitze des Gewindebohrers 16, wo es infolge des zu bearbeitenden Sacklochs umgelenkt wird und über die Nuten 21 wieder zurückfließt, wobei angefallene Späne mitgenommen werden. Zur Abdichtung des Gewindebohrers 16 ist eine in einer Nut des Haltekörpers 13 gehaltene Runddichtung 37 vorgesehen, die umfangsseitig am Haltebereich 15 des Gewindebohrers 16 anliegt. Bei einer Bearbeitung ohne Kühlmittelzufluß oder bei einem Kühlmittelzufluß über die Mündung 26 kann das Kühlmittelanschlußglied 29 abgenommen werden.

Zum Auswechseln des Gewindebohrers 16 braucht lediglich die Spannschraube 19 etwas gelockert, der Werkzeugwechsel vorgenommen und die Spannschraube 19 wieder angezogen werden.

Zur Bearbeitung von Durchgangslöchern bzw. Durchgangsbohrungen wird die in Fig. 4 dargestellte Spannvorrichtung verwendet, die weitgehend der in Fig. 1 dargestellten Spannvorrichtung entspricht. So erfolgt beispielsweise die Zuführung von Kühlmittel über den Schaft 10 in entsprechender Weise, wobei auf eine nochmalige detaillierte Darstellung verzichtet wurde. Im übrigen sind entsprechende Bauteile mit denselben Bezugszeichen versehen und nicht nochmals beschrieben.

Der hier verwendete Gewindebohrer 40 weist keinen zentralen Kühlmittelkanal auf, dafür erstrecken sich die drei umfangsseitigen Längsnuten über die gesamte Länge dieses Gewindebohrers 40. Die Schrägfläche 11 am Schaft 10 ist mit einer Ringnut 41 versehen, die über wenigstens eine Verbindungsnut 42 mit dem Kühlmittelkanal 25 verbunden ist. Ein Balgkörper 43 aus Gummi oder einem anderen elastischen Kunststoffmaterial ist auf den Haltekörper 13 aufgeschoben, wobei eine nach innen weisende ringförmige Erhebung 44 dieses Balgkörpers 43 in eine entsprechende Umfangsnut 45 im Haltekörper 13 zur Fixierung der Lage eingreift. Ein Spannring 46 presst den Balgkörper 43 zusätzlich gegen die Haltekörper 13. Der den Gewindebohrer 40 zum Teil übergreifende, wellenförmig ausgebildete Bereich des Balgkörpers 43 weist eine Öffnung 47 auf, die im wesentlichen dem Querschnitt des Gewindebohrers 40 entspricht.

Im Betrieb gelangt Kühlmittel über den Kühlmittelkanal 25, die Verbindungsnut 42, die Ringnut 41 und die Nuten 21 in den Innenraum des Balgkörpers 43, von wo es durch die Öffnung 47 bzw. die Nuten 21 an dieser Stelle zum Bearbeitungsort hin austreten kann und dabei die Nuten 21 ausspült.

Bei dem in Fig. 5 dargestellten Ausführungsbeispiel ist der Schaft 10 wiederum in entsprechender Weise in einer Bohrung 50 eines Haltekörpers 51 fixiert. Der Kühlmittelzufluß erfolgt wiederum auf dieselbe Weise, so daß auf eine nochmalige Darstellung verzichtet wurde. Der Haltebereich 15 eines nicht näher dargestellten Werkzeuges wird in die Bohrung 49 einer aufgeschobenen Spannzange 52 eingesetzt, die zwei gegensinnig zueinander verlaufende, konusförmige Außenflächen 53, 54 aufweist. Eine werkzeugseitige Voderansicht dieser Spannzange 52 ist in Fig. 6 dargestellt. Diese Spannzange weist dabei in üblicher Weise nicht durchgängige Schlitze 55 auf, die ein Zusammenpressen der Spannzange 52 gestatten. Diese Spannzange 52 ist in eine der Außenfläche 53 entspre chenden konusförmigen Ausnehmung 56 im Haltekörper 51 eingesetzt und weist dort endseitig eine Schrägfläche 57 auf, die im wesentlichen der Schrägfläche 11 bzw. der des Haltebereichs 15 entspricht. Diese Spannzange 52 wird mittels eines aus einem Spannring 58 und einer Spannhülse 59 bestehenden Spannteiles 60 ins Innere des Haltekörpers 51 gepresst, wobei der Haltebereich 15 des Werkzeuges gegen die Schrägfläche 11 gedrückt wird. Die topfförmige Spannhülse 59 ist auf der Außenfläche des Haltekörpers 51 axial verschiebbar und weist an ihrem Bodenbereich eine konusförmig abgeschrägte Öffnung 61 auf, die entsprechend der konusförmigen Außenfläche 54 der Spannzange 52 geformt ist und dort anliegt. Der Spannring 58 weist ein auf einem Außengewinde des Haltekörpers 51 verschraubbares Innengewinde auf und übergreift die Spannhülse 59 in der Weise, daß eine Verzahnung entsteht. Zwischen den sich verzahnenden Flächen des Spannrings 58 und der Spannhülse 59 ist eine Kugelring 63 angeordnet, der ein gegenseitiges, reibungsarmes Verdrehen der beiden Teile gegeneinander gestattet, wobei eine axiale Kraft übertragbar ist. Eine in eine Innennut des Spannrings 58 eingelegte Runddichtung 64 liegt umfangsseitig an der Spannhülse 59 an und besitzt neben der Dichtfunktion eine Haltefunktion. Eine Sicherungsschraube 65 ist an einer Stelle im Bereich des Außengewindes 62 durch den Spannring 58 hindurch in den Haltekörper 51 einschraubbar und wirkt auf eine umlaufende Nut 48 im Haltekörper 51 ein. Zum Auswuchten der Anordnung weist der Spannring 58 stirnsei tig ein Ausgleichsgewicht 66 auf, das in seiner Lage verändert werden kann. Anstelle oder zusätzlich zu diesem Ausgleichsgewicht 66 können auch Auswuchtbohrungen vorgesehen sein.

Eine Abdrückschraube 67 ist radial in den Haltekörper 51 im Bereich der nicht an der Schrägfläche 11 des Schaftes 10 anliegenden Schrägfläche 57 der Spannzange 52 einschraubbar, wobei beim Einschrauben ihr vorderes, entsprechend konisch ausgebildetes Ende gegen diese Schrägfläche 57 gepresst wird, um auf diese Weise die Spannzange 52 von ihrem Haltesitz abzudrücken.

Zur Montage wird das Werkzeug in die Spannzange 52 eingesetzt und diese wiederum in die Ausnehmung 56 eingesteckt. Danach wird das zweiteilige Spannteil 60 darüber geschoben und der Spannring 58 angezogen, wobei der Haltebereich 15 des Werkzeuges mittels der Spannzange 52 gegen die Schrägfläche 11 gepresst wird und eine gute Zentrierung stattfindet. Mittels der Sicherungsschraube 65 kann der Spannring 58 in seiner Spannposition fixiert werden. Für den Werkzeugwechsel wird der Spannring nach dem Lösen der Sicherungsschraube 65 etwas gelockert, die Spannzange mittels der Abdrückschraube 67 abgedrückt, wonach ein Werkzeugwechsel erfolgen kann, sofern der entsprechende Haltebereich 15 denselben Durchmesser aufweist. Ist dies nicht der Fall, so muß die Spannzange 52 durch eine andere mit dem gewünschten Innendurchmesser ersetzt werden.

Die Kühlmittelzuleitung zum Werkzeug kann auch bei dem in Fig. 5 dargestellten Ausführungsbeispiel entweder gemäß Fig. 1 oder gemäß Fig. 4 erfolgen, wobei im einen Falle das Werkzeug einen zentralen Kühlmittelkanal gemäß Fig. 5 und im anderen Falle wenistens eine außenseitige Längsnut aufweisen muß.

Anstelle der verwendeten Schlitzschrauben 19, 65, 67 können selbstverständlich auch beispielsweise Innensechskantschrauben und anstelle des zylindrischen Schafts 10 kann auch ein konischer Schaft oder ein auf andere Weise verstärkter Schaft treten, der in entsprechender Weise mit dem Haltekörper 13 bzw. 51 verbunden ist.

**Ansprüche**

1. Spannvorrichtung für spanende Werkzeuge, wie Gewindebohrer, Fräser od. dgl., insbesondere Vollhartmetall-Werkzeuge, mit einem den Haltebereich des Werkzeuges aufnehmenden, mit einem Schaft versehenen Haltekörper, dadurch gekennzeichnet, daß der Haltekörper (13; 51) mit einer bis zu einer Schrägfläche (11) reichenden, den entsprechend geformten Haltebereich (15) des Werkzeuges (16) aufnehmenden Bohrung (12; 49) versehen ist und daß ein auf das Werkzeug (16) einwirkendes und dieses gegen die Schrägfläche (11) pressendes Klemmteil (19; 52) vorgesehen ist.

2. Spannvorrichtung nach Anspruch 1, dadurch gekennzeichnet, daß die Schrägfläche (11) am in den Haltekörper (13; 51) eintauchenden und mit diesem fest verbundenen Schaft (10) angeordnet ist.

3. Spannvorrichtung nach Anspruch 2, dadurch gekennzeichnet, daß die Bohrung (12; 50, 49) im Haltekörper durchgehend ist und auch den mit der Schrägfläche (11) versehenen Endbereich des Schaftes (10) aufnimmt.

4. Spannvorrichtung nach einem der vorhergehenden Anspüche, dadurch gekennzeichnet, daß das Klemmteil (19) als Spannschraube in einer Gewindebohrung (18) ausgebildet ist, die gegen die Schrägfläche (11) gerichtet durch den Haltekörper (13) bis zur Bohrung (12) verläuft.

5. Spannvorrichtung nach Anspruch 4, dadurch gekennzeichnet, daß das Ende der als Klemmteil (19) verwendeten Spannschraube an einer entsprechend ausgestalteten Einformung (20) am Haltebereich (15) des eingespannten Werkzeuges (16) anliegt.

6. Spannvorrichtung nach Anspruch 4 oder 5, dadurch gekennzeichnet, daß die Axialrichtung der Gewindebohrung (18) im wesentlichen senkrecht zur Schrägfläche (11) verläuft.

7. Spannvorrichtung nach einem der Ansprüche 1 bis 3, dadurch gekennzeichnet, daß das Klemmteil (52) als mit zwei gegensinnig zueinander geneigten, konusförmigen Außenflächen (53, 54) versehene, den Haltebereich (15) des Werkzeuges ein spannende Spannzange ausgebildet ist, daß die erste Außenfläche (53) an einer entsprechend geformten Innenfläche des Haltekörpers (51) anlegbar ist und daß sich die andere Außenfläche (54) an einer entsprechenden Konusfläche eines die Spannzange (52) in das Innere des Haltekörpers (51) schiebenden Spannteiles (60) abstützt.

8. Spannvorrichtung nach Anspruch 7, dadurch gekennzeichnet, daß das Spannteil (60) den Haltekörper (51) wenigstens teilweise umgreift und über ein Gewinde (62) daran verschiebbar ist.

9. Spannvorrichtung nach Anspruch 8, dadurch gekennzeichnet, daß ein die Schraubbewegung des Spannteiles (60) hemmendes Sicherungselement (65), insbesondere eine Sicherungsschraube vorgesehen ist.

10. Spannvorrichtung nach einem der Ansprüche 7 bis 9, dadurch gekennzeichnet, daß das Spannteil (60) aus einem Gewindeteil (58) und einem die Konusfläche aufweisenden Teil (59) besteht, wobei diese beiden Teile (58, 59) über Wälzglieder (63) gegeneinander verdrehbar ausgebildet sind.

11. Spannvorrichtung nach Anspruch 10, dadurch gekennzeichnet, daß die als Kugelring ausgebildeten Wälzglieder (63) zwischen einander umgreifenden Spannflächen der beiden Teile (58, 59) angeordnet sind.

12. Spannvorrichtung nach einem der Ansprüche 7 bis 11, dadurch gekennzeichnet, daß das ins Innere des Haltekörpers (51) weisende Ende der Spannzange (52) als Schrägfläche (57) ausgebildet ist, deren Ebene der der Schrägfläche des Werkzeuges im wesentlichen entspricht.

13. Spannvorrichtung nach einem der Ansprüche 7 bis 12, dadurch gekennzeichnet, daß eine an der Schrägfläche (57) der Spannzange (52) mündende Abdrückschraube (67) im Haltekörper (51) vorgesehen ist, die eine entsprechend geneigte Endfläche aufweist.

14. Spannvorrichtung nach einem der vorhergehenden Ansprüche, dadurch gekennzeichnet, daß ein von der Schrägfläche (11) im Haltekörper (13; 51) ausgehender, axial durch den Schaft (10) verlaufender Kühlmittelkanal (25) vorgesehen ist.

15. Spannvorrichtung nach Anspruch 14, dadurch gekennzeichnet, daß der Kühlmittelkanal (25) am Schaftende und/oder an der Schaftumfangsfläche nahe des Haltekörpers (13; 51) seitlich mündet.

Spannvorrichtung nach Anspruch 15, dadurch gekennzeich net, daß wenigstens eine der Mündungen (26, 27) durch ein Dichtungsglied (28), insbesondere eine Dichtungsschraube verschließbar ist.

17. Spannvorrichtung nach Anspruch 15 oder 16, dadurch gekennzeichnet, daß ein auf den Schaft (10) aufschiebbares und drehbar gehaltenes Kühlmittelanschlußglied (29) die seitliche Mündung (27) mittels einer Innenringnut (32) umgreift, die über einen Verbindungskanal (33) mit einer Anschlußstelle (34) für eine Kühlmittelleitung verbunden ist.

18. Spannvorrichtung nach Anspruch 17, dadurch gekennzeichnet, daß die Anschlußstelle (34) als Schnellwechselanschluß ausgebildet ist.

19. Spannvorrichtung nach Anspruch 17 oder 18, dadurch gekennzeichnet, daß ein die Verschiebung des Kühlmittelanschlußgliedes (29) auf dem Schaft (10) hemmendes Glied (30), insbesondere ein Seegerring vorgesehen ist.

20. Spannvorrichtung nach einem der Ansprüche 17 bis 19, dadurch gekennzeichnet, daß auf beiden Seiten der Innenringnut (32) Ringdichtungen (35) vorgesehen sind.

21. Spannvorrichtung für Werkzeuge mit einem zentralen Kühl mittelkanal nach einem der Ansprüche 14 bis 20, dadurch gekennzeichnet, daß die das Werkzeug aufnehmende Bohrung (12; 49) mit einer Ringdichtung (37) versehen ist.

22. Spannvorrichtung für Werkzeuge mit wenigstens einem außenseitigen Kühlmittelkanal nach einem der Ansprüche 14 bis 20, dadurch gekennzeichnet, daß die Schrägfläche (11) im Haltekörper (13; 51) eine Ringnut (41) aufweist, die über wenigstens eine Verbindungsnut (42) mit dem Kühlmittelkanal (25) verbunden ist.

23. Spannvorrichtung nach Anspruch 22, dadurch gekennzeichnet, daß ein umfangsseitig am Haltekörper (13) befestigbarer Balgkörper (43) vorgesehen ist, der sich bis zur Umfangsfläche des aus dem Haltekörper (13) ragenden Werkzeuges (40) erstreckt.

24. Spannvorrichtung nach Anspruch 23, dadurch gekennzeichnet, daß eine ringförmige Erhebung (44) an der Innenseite des Balgkörpers (43) in eine Umfangsringnut (45) des Haltekörpers (13) einsetzbar ist.

# FIG. 1

EP 0 301 185 A1

FIG. 2

FIG.3

FIG. 4

FIG.6

FIG. 5

![Europäisches Patentamt] **Europäisches Patentamt**

**EUROPÄISCHER RECHERCHENBERICHT**

Nummer der Anmeldung

| | EINSCHLÄGIGE DOKUMENTE | | EP 88107728.3 |
|---|---|---|---|
| **Kategorie** | Kennzeichnung des Dokuments mit Angabe, soweit erforderlich, der maßgeblichen Teile | **Betrifft Anspruch** | **KLASSIFIKATION DER ANMELDUNG (Int. Cl. 4)** |
| Y | SOVIET INVENTIONS ILLUSTRATED, Sektion P, Woche K26, 10. August 1983 <br><br> DERWENT PUBLICATIONS LTD., London, P 54 <br><br> * SU-952 458 (KARGAEVLA) * <br> -- | 1-3 | B 23 B 31/04 |
| Y | US - A - 3 557 419 (F.A.FLANNERY) <br> * Fig. 6 * <br> -- | 1-3 | |
| A | GB - A - 1 279 974 (KINGSBURY FITCH) <br> * Gesamt * <br> -- | 1 | |
| A | US - A - 2 507 286 (C.A.TROCKI) <br> * Fig. 2 * <br> -- | 1 | **RECHERCHIERTE SACHGEBIETE (Int. Cl.4)** |
| A | DE - A1 - 3 019 970 (HERTEL) <br> * Fig. 1-5 * <br> -- | 1 | B 23 B 27/00 <br> B 23 B 29/00 <br> B 23 B 31/00 |
| A | GB - A - 1 262 426 (NATIONAL TWIST DRILL) <br> * Fig. 1 * <br> -- | 7,8 | B 23 B 51/00 <br> B 23 Q  3/00 <br> B 23 C  5/00 |
| A | DE - A - 2 337 175 (F.WEBER) <br> * Fig. 1 * <br> -- | 9 | B 23 G  1/00 |
| A | US - A - 2 510 203 (R.W. ANDREASSON) <br> * Fig. 2,4 * | 17,18 | |

Der vorliegende Recherchenbericht wurde für alle Patentansprüche erstellt.

| Recherchenort | Abschlußdatum der Recherche | Prüfer |
|---|---|---|
| WIEN | 21-10-1988 | NIMMERRICHTER |